(19) Europäisches Patentamt / European Patent Office / Office européen des brevets

(11) **EP 3 080 670 B1**

(12) **FASCICULE DE BREVET EUROPEEN**

(45) Date de publication et mention de la délivrance du brevet:
**23.10.2024 Bulletin 2024/43**

(21) Numéro de dépôt: **14821787.0**

(22) Date de dépôt: **03.12.2014**

(51) Classification Internationale des Brevets (IPC):
**G05B 23/02** *(2006.01)*

(52) Classification Coopérative des Brevets (CPC):
**G05B 23/0283; G06Q 10/20**

(86) Numéro de dépôt international:
**PCT/FR2014/053148**

(87) Numéro de publication internationale:
**WO 2015/086957 (18.06.2015 Gazette 2015/24)**

(54) **PRÉVISION D'OPÉRATIONS DE MAINTENANCE A APPLIQUER SUR UN MOTEUR**

VORHERSAGE VON WARTUNGSOPERATIONEN FÜR EINEN MOTOR

FORECASTING MAINTENANCE OPERATIONS TO BE APPLIED TO AN ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2013 FR 1362549**

(43) Date de publication de la demande:
**19.10.2016 Bulletin 2016/42**

(73) Titulaire: **Safran Aircraft Engines**
**75015 Paris (FR)**

(72) Inventeurs:
• **ANFRIANI, Alexandre**
  **F-77550 Moissy-Cramayel Cedex (FR)**
• **RICORDEAU, Julien, Alexis, Louis**
  **F-77550 Moissy-Cramayel Cedex (FR)**

(74) Mandataire: **Brevalex**
**Tour Trinity**
**1 B Place de la Défense**
**92400 Courbevoie (FR)**

(56) Documents cités:
**WO-A1-2013/182823    US-A1- 2012 179 326**

• **NAEEM ET AL: "Impacts of low-pressure (LP) compressors' fouling of a turbofan upon operational-effectiveness of a military aircraft", APPLIED ENERGY, ELSEVIER SCIENCE PUBLISHERS, GB, vol. 85, no. 4, 2 January 2008 (2008-01-02), pages 243 - 270, XP022406374, ISSN: 0306-2619**
• **HUGUES E ET AL: "Methods to assess the operational reliability of an aircraft system: problemof dependency between component states", LAAS REPORT, XX, XX, no. 6449, 1 June 2006 (2006-06-01), XP008083016**
• **MUHAMMAD NAEEM ET AL: "Implications of a Military Turbofan's High-Pressure Turbine Erosion for Blade's Creep Life-Consumption", JOURNAL OF PROPULSION AND POWER, vol. 26, no. 1, 1 January 2010 (2010-01-01), pages 177 - 182, XP055147177, ISSN: 0748-4658, DOI: 10.2514/1.38828**

## Description

### DOMAINE DE L'INVENTION

La présente invention se rapporte au domaine de la maintenance d'un moteur d'aéronef. En particulier, l'invention concerne un procédé et un système de prévision d'opérations de maintenance à appliquer sur un moteur d'aéronef.

La prévision des opérations de maintenance sur un moteur d'aéronef est déterminée en fonction de l'estimation de l'endommagement ou de l'usure des différents éléments du moteur.

Cependant, l'exploitation d'un moteur d'aéronef dans des conditions qui peuvent varier d'une mission de vol à une autre, comme par exemple dans le cas d'un aéronef militaire, ne permet pas de prédire de manière directe l'endommagement du moteur. Dans ce cas, l'estimation est basée sur des compteurs d'endommagement qui sont calculés sur chaque mission à partir d'enregistrements de paramètres de vol.

En effet, un moteur d'aéronef se décline en différents modules comportant chacun différents composants. Chaque composant peut comporter plusieurs zones ou éléments à surveiller, dimensionnant en termes de durée de vie du composant. Par la suite et pour simplifier la description, nous parlerons uniquement de composants. Un compteur d'endommagement est associé à chaque composant pour compter le nombre de cycles réels consommé par le composant. En outre chaque compteur d'endommagement est associé à au moins un plafond d'endommagement. Différentes actions de maintenance peuvent être réalisées lorsqu'un (ou plusieurs) plafond(s) est (sont) atteint(s). Ces actions de maintenance sont décrites dans un plan de maintenance et vont de l'inspection sans dépose au remplacement des pièces endommagées en passant par des inspections nécessitant des déposes. Le but des opérations de gestion de la maintenance est de réaliser les opérations de maintenance juste à temps afin de pousser l'utilisation des pièces, ou composants, jusqu'à leur potentiel maximum d'exploitation.

Toutefois, les consommations des compteurs d'endommagement ainsi que la vitesse de ces consommations varient fortement d'une mission à une autre, notamment selon le type de mission. Les compteurs d'endommagement peuvent donc atteindre leurs plafonds à des vitesses différentes et donc à des vols différents. La maintenance définie à partir des compteurs d'endommagement peut alors nécessiter des déposes assez rapprochées. En effet, le fait que des compteurs d'endommagement peuvent atteindre leurs plafonds à des instants différents se traduit par des déposes parfois rapprochées. Ces différentes déposes peuvent affecter ainsi la disponibilité des aéronefs sur leurs bases.

L'objet de la présente invention est par conséquent d'optimiser les opérations de maintenance sur les moteurs d'aéronefs pour augmenter la disponibilité des aéronefs tout en respectant toutes les exigences et contraintes de sécurité.

Le document "Impacts of low-pressure (LP) compressors' fouling of a turbofan upon operational-effectiveness of a military aircraft", APPLIED ENERGY, ELSEVIER SCIENCE PUBLISHERS, GB, vol. 85, no. 4, 2 janvier 2008 (2008-01-02), pages 243-270, XP22406374, ISSN: 0306-2619 décrit un procédé de contrôle d'un moteur d'une aéronef. Ce document écrit également une simulation sur l'effectivité de l'opération des moteurs à partir de la simulation de composants et qui va aider à la prise de décisions. Le document "Methods to assess the operational reliability of an aircraft system: problemof dependency between component states", LAAS REPORT, XX, XX, no. 6449, 1 juin 2006 (2006-06-01), XP008083016, décrit un procédé pour appliquer différentes stratégies de maintenance d'un moteur d'une aéronef à partir d'une modélisation des composants du moteur et leur simulation.

### OBJET ET RÉSUMÉ DE L'INVENTION

La présente invention est définie par les caractéristiques des revendications indépendantes.

### BRÈVE DESCRIPTION DES DESSINS

D'autres particularités et avantages du dispositif et du procédé selon l'invention ressortiront mieux à la lecture de la description faite ci-après, à titre indicatif mais non limitatif, en référence aux dessins annexés sur lesquels :

- la Fig. 1 illustre de manière schématique un système de prévision d'opérations de maintenance à appliquer sur un moteur ou une partie d'un moteur selon l'invention ;
- la Fig. 2 illustre de manière schématique une structure de compteurs d'endommagement d'un moteur d'aéronef ;
- la Fig. 3 est un organigramme illustrant de manière schématique un procédé de prévision d'opérations de maintenance sur un moteur d'aéronef, selon l'invention ;
- la Fig. 4A illustre de manière schématique un tableau comportant un ensemble de missions d'expérience et les capteurs de potentiel associés ;
- la Fig. 4B illustre de manière schématique un tableau décrivant un plan de maintenance d'un moteur d'aéronef ;
- la Fig. 5 est un logigramme par bloc illustrant le procédé de prévision d'opérations de maintenance, selon un mode de réalisation préféré de l'invention ; et
- les Figs. 6A-6D illustrent de manière schématique deux exemples d'application du procédé de la présente invention.

## DESCRIPTION DÉTAILLÉE DE MODES DE RÉALISATION

Le principe général de l'invention est de pronostiquer la consommation des compteurs d'endommagement d'un moteur d'aéronef à partir d'une base de données de missions et d'utiliser ce pronostic pour appliquer au mieux une stratégie de maintenance permettant d'optimiser la disponibilité du moteur et les coûts de maintenance dudit moteur.

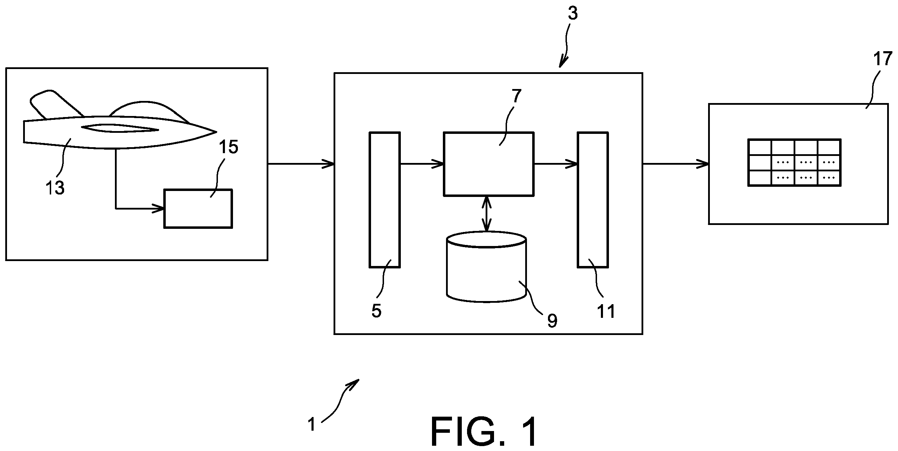

La Fig. 1 illustre de manière schématique un système de prévision d'opérations de maintenance à appliquer sur un moteur d'aéronef, selon l'invention.

Avantageusement, le système de prévision 1 est installé dans une station au sol et comporte un système informatique 3 comprenant de manière habituelle des moyens d'entrée 5, des moyens de traitement 7, des moyens de stockage 9, et des moyens de sortie 11. On notera que les moyens de stockage 9 peuvent comporter un programme d'ordinateur comprenant des instructions de code adaptées à la mise en oeuvre du procédé de prévision selon l'invention. Ce programme d'ordinateur peut être exécuté par les moyens de traitement 7 en relation avec les moyens de stockage 9 et les moyens d'entrée 5 et de sortie 11.

Durant chaque mission de vol, l'aéronef 13 procède à la collecte et l'enregistrement des paramètres de vol sur ses calculateurs embarqués 15. Ces données peuvent être déchargées régulièrement, par exemple après chaque mission, pour être récupérées par le système de prévision 1. On notera qu'une partie de ces données peut aussi être transmise à la station au sol en temps réel.

Les données récupérées par le système de prévision 1 sont utilisées pour déterminer la consommation des compteurs d'endommagements 17 (i.e. compter les nombres réels de cycles vus ou consommés par les modules) permettant d'estimer l'usure ou l'endommagement des différents modules du moteur d'aéronef.

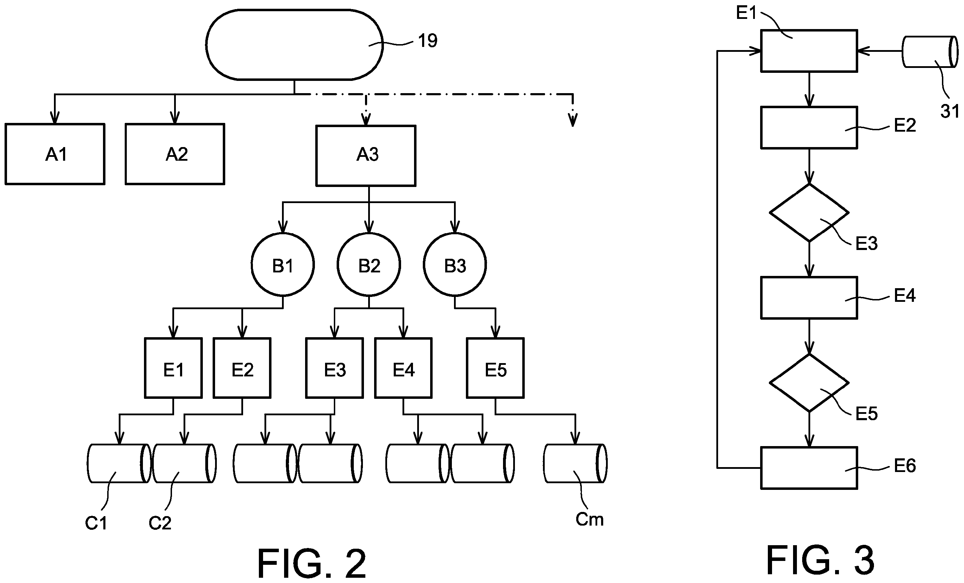

La Fig. 2 illustre de manière schématique une structure de compteurs d'endommagement d'un moteur d'aéronef.

Le moteur d'aéronef 19 est constitué d'un ensemble de modules A1, A2, A3 comportant chacun différents composants B1, B2, B3. Chaque composant peut comporter plusieurs zones ou éléments E1-E5 qui peuvent être utilisés pour dimensionner la durée de vie du composant. Alors, au moins un compteur d'endommagement C1-Cm est associé à chaque élément E1-E5 pour compter le nombre de cycles réels consommés par cet élément. La consommation de chaque compteur d'endommagement est limitée par au moins un plafond d'endommagement caractérisant la durée de vie (avant défaillance) du composant suivi par le compteur d'endommagement.

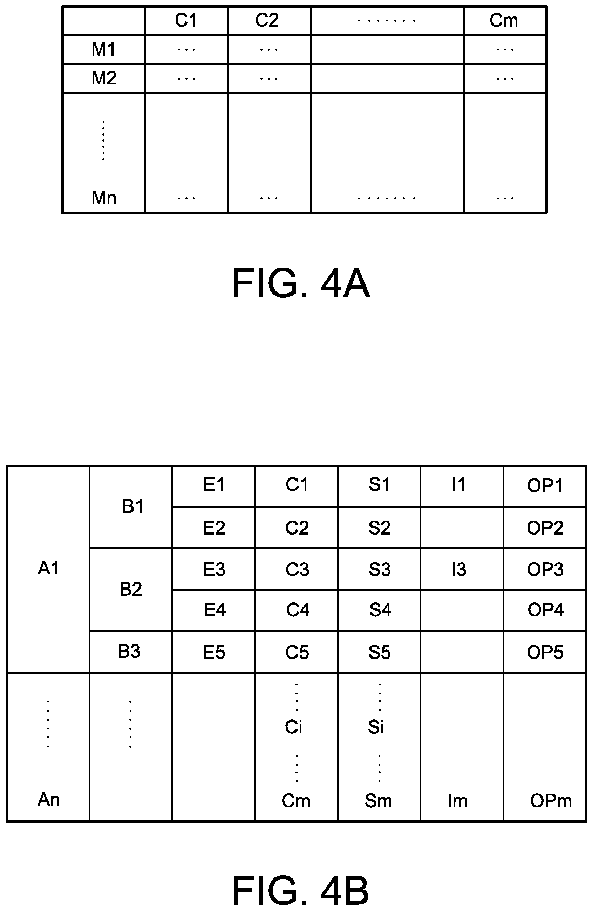

Ainsi, lorsqu'un ou plusieurs plafonds d'endommagement sont atteints, des actions de maintenance décrites dans un tableau ou plan de maintenance (voir Fig. 4B) doivent être envisagées.

La Fig. 3 est un organigramme illustrant de manière schématique un procédé de prévision d'opérations de maintenance sur un moteur d'aéronef, selon l'invention.

A l'étape E1, les moyens de traitement 7 sont adaptés pour simuler une consommation de compteurs d'endommagement C1-Cm en tirant de manière itérative une succession de missions de simulation depuis une base de données d'apprentissage 31 contenue par exemple dans les moyens de stockage 9. La base de données d'apprentissage 31 contient un ensemble de missions d'expérience et un plan de maintenance prédéterminé. Les missions d'expérience comportent des données collectées au fur et à mesure de vols réels et constituent un retour d'expérience.

La Fig. 4A illustre de manière schématique un tableau comportant un ensemble de missions d'expérience et les capteurs de potentiel associés.

La première colonne indique les codes ou numéros des différentes missions M1-Mn. Les autres colonnes font référence aux différents compteurs d'endommagements C1-Cm associés aux différents éléments du moteur et indiquent la consommation de chaque compteur au cours de chaque mission. Le nombre de cycles ou consommation indiqué par chaque compteur est par exemple une mesure de l'usure ou de l'endommagement du composant correspondant du moteur.

La Fig. 4B illustre de manière schématique un tableau décrivant un plan de maintenance d'un moteur d'aéronef.

La première colonne fait référence à l'ensemble de modules A1-An du moteur. Les différents composants B1-B3 de chaque module sont indiqués dans la deuxième colonne. La troisième colonne fait référence aux différentes localisations ou différents éléments E1-E5 de chaque composant. La quatrième colonne concerne les compteurs d'endommagements C1-Cm associés aux différents éléments du moteur. La cinquième colonne fait référence aux plafonds d'endommagent S1-Sm associés aux différents compteurs d'endommagements C1-Cm et la sixième colonne indique éventuellement des intervalles d'inter-inspection I1-Im pour des éléments pouvant être inspectés plusieurs fois avant d'être remplacés. Finalement, la septième colonne décrit l'opération de maintenance OP1-OPm à réaliser sur chaque élément ou composant lorsque le plafond d'endommagement correspondant est atteint.

Avantageusement, la base de données d'apprentissage 31 peut être enrichie par des indicateurs définissant les différentes missions. Chaque mission M1-Mn peut par exemple être définie par un indicateur de sévérité, un indicateur de durée de vol, et un indicateur du type de mission. L'indicateur de sévérité représente l'endommagement global sur la mission. Par exemple l'endommagement global peut être une valeur maximale des compteurs d'endommagement, une valeur moyenne, ou une valeur minimale.

L'étape E1 permet ainsi de simuler la consommation des compteurs d'endommagement C1-Cm en simulant successivement différentes missions à partir des données issues du passé contenues dans la base de données d'apprentissage 31. Chaque mission est tirée de manière aléatoire et la consommation des compteurs d'endommagement est déduite de la mission tirée.

Selon une première variante, le tirage est réalisé de manière complètement aléatoire sans aucune indication sur les missions futures afin de modéliser le vieillissement d'un moteur ou d'un parc de moteurs.

Selon une deuxième variante, la simulation est réalisée de manière orientée en filtrant la base d'apprentissage et en tirant aléatoirement selon le filtre sélectionné. Dans ce cas, la simulation est particularisée en tenant compte d'informations de prévision des prochaines missions (type de mission, sévérité, durée de vol). Par exemple, le tirage de la succession de missions de simulation peut être réalisé de manière aléatoire sur un sous-ensemble de missions d'expérience pouvant être sélectionnées en fonction des indicateurs de sévérité de mission, et/ou de durée de vol des missions, et/ou de type de mission.

Aux étapes E2 et E3, les moyens de traitement 7 sont adaptés pour déterminer à chaque itération le cumul de consommation de chacun des compteurs d'endommagement C1-Cm jusqu'à ce qu'au moins un compteur d'endommagement relatif à une mission de simulation courante atteigne une valeur prédéterminée bornée par le plafond d'endommagement associé au compteur d'endommagement. Ainsi, la valeur prédéterminée est inférieure ou égale au plafond d'endommagement correspondant. La valeur prédéterminée est par exemple déterminée en fonction du nombre de missions et de la valeur du plafond d'endommagement.

Plus particulièrement, pour chaque mission de simulation courante issue de l'étape E1, les moyens de traitement 7 calculent à l'étape E2 le cumul de consommation de chacun des compteurs d'endommagement C1-Cm. L'étape E3 est un test pour vérifier s'il existe au moins un compteur d'endommagement relatif à la mission de simulation courante qui a déjà atteint la valeur prédéterminée associée au plafond d'endommagement. Si le résultat du test est négatif, on reboucle à l'étape E1 pour tirer une nouvelle mission courante. En revanche, si au moins un compteur d'endommagement a atteint la valeur prédéterminée alors on passe aux étapes suivantes E4-E6.

Aux étapes E4-E6, les moyens de traitement 7 sont adaptés pour appliquer une stratégie de maintenance sur la mission de simulation courante déterminant ainsi les opérations de maintenance à prévoir sur le moteur d'aéronef 19 et des indicateurs de maintenance représentatifs de ces opérations.

En particulier, à l'étape E4, on détermine l'action de maintenance correspondant au plafond d'endommagement Si atteint par le compteur d'endommagement Ci.

A l'étape E5, on vérifie si la stratégie de maintenance est applicable à l'action de maintenance de l'étape E4. Si oui, on passe à l'étape E6 et sinon, on reboucle sur l'étape E1.

Finalement, à l'étape E6, on applique la stratégie de maintenance et on détermine les indicateurs de maintenance. Avantageusement, ces indicateurs comportent le nombre de déposes et les types de déposes.

Ce procédé permet ainsi de prévoir le nombre et le type d'actions de maintenance en fonction de la stratégie engagée pour une séquence de tirage de missions.

Avantageusement, la simulation de consommation des compteurs d'endommagement est répétée une pluralité de fois pour déterminer un ensemble de valeurs de consommation associées à chaque indicateur de maintenance. En outre, les moyens de traitement 7 sont adaptés pour calculer la moyenne des valeurs de consommation associées à chaque indicateur de maintenance. Ainsi, le renouvellement un grand nombre de fois des étapes de la Fig. 2 permet d'estimer les valeurs moyennes des indicateurs de maintenance avec précision et permet en outre de tirer des informations statistiques à partir de ces valeurs, selon par exemple la méthode de Monte Carlo.

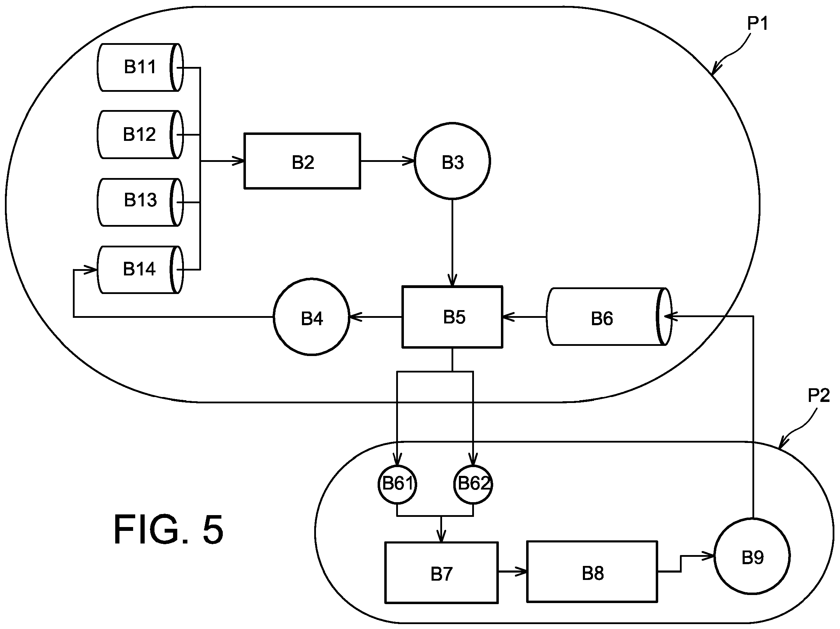

La Fig. 5 est un logigramme par bloc illustrant le procédé de prévision d'opérations de maintenance, selon un mode de réalisation préféré de l'invention. Ce procédé est avantageusement réalisé par le système de prévision de la Fig. 1.

Ce schéma comporte une première partie P1 concernant une simulation d'un plan de maintenance et une deuxième partie P2 concernant une optimisation des stratégies de maintenance.

Dans la première partie P1, les blocs $B_{11}$, $B_{12}$, $B_{13}$ et $B_{14}$ sont des données d'entrée utilisées pour prédire la consommation des compteurs d'endommagement C1-Cm et peuvent être issues du passé et éventuellement filtrées en fonction des missions futures prévues. Les données issues du passé permettent de compléter la base de données d'apprentissage 31. Les données de prévision permettent d'affiner les prédictions en donnant des informations sur les types, les durées et les sévérités des missions, affinant ainsi l'utilisation de la base de données d'apprentissage 31.

Plus particulièrement, le bloc $B_{11}$ concerne les données de sévérité qui permettent de classer les missions M1-Mn en fonction de leur sévérité en termes de consommation de compteurs d'endommagement C1-Cm. Il peut s'agir de données passées et éventuellement choisies en fonction de la répartition des missions selon le type de profil de la flotte par exemple.

Le bloc $B_{12}$ concerne la durée des missions M1-Mn. Il s'agit du temps de vol de chaque mission ou éventuellement, d'informations plus détaillées du type temps de décollage, temps passé au ralenti, etc.

Le bloc $B_{13}$ concerne des données permettant de classer les missions M1-Mn en fonction de leur type.

Ces données correspondent aux descriptifs des missions de l'aéronef comme par exemple une mission du type « entrainement », « interception », « ravitaillement », etc. Il peut s'agir de données passées ou de prévisions de futures missions.

Le bloc $B_{14}$ concerne l'état courant des compteurs d'endommagement C1-Cm. Il s'agit des consommations courantes et passées pour chaque compteur d'endommagement sur un même moteur.

Le bloc $B_2$ est un simulateur de consommation des capteurs de potentiel C1-Cm mis en oeuvre par les moyens de traitement 7. En entrée, le simulateur de consommation $B_2$ possède les données $B_{11}$, $B_{12}$, $B_{13}$ et $B_{14}$ correspondant à une liste de missions pour lesquelles la sévérité, la durée, le type de missions et l'état courant des compteurs C1-Cm sont connus. Le simulateur de consommation $B_2$ fait un tirage aléatoire dans la base de données d'apprentissage 31 pour tirer des missions qui coïncident ou qui sont les plus proches aux données d'entrée. On fait ainsi un tirage d'une succession de missions sur un sous ensemble de missions d'expérience appartenant à une classe spécifique de missions. Le simulateur de consommation $B_2$ utilise par exemple des filtres pour tirer des missions appartenant à une certaine sévérité, et/ou un certain type de missions et/ou autour d'une certaine durée.

Le bloc $B_3$ représente les données de sortie du simulateur de consommation $B_2$ comportant la prévision de consommation des compteurs d'endommagement C1-Cm pour chaque vol. Ainsi, au bout de chaque mission, on a le cumul de consommation de chacun des compteurs d'endommagement.

Le bloc $B_4$ est un simulateur de maintenance mis en oeuvre par les moyens de traitement 7, qui compare les cumuls de consommation des compteurs d'endommagement C1-Cm aux valeurs prédéterminées associées aux plafonds d'endommagement S1-Sm définis dans le plan de maintenance (Fig. 4B). Si aucun des compteurs d'endommagement n'a atteint la valeur prédéterminée qui lui est associée, alors l'état courant des compteurs (bloc $B_{14}$) est actualisé par des données de mises à jour (bloc $B_5$) tenant compte du vieillissement des composants, et on recommence ensuite les étapes de simulation de consommation des compteurs d'endommagement.

En revanche, lorsqu'au moins un des compteurs d'endommagement a atteint la valeur prédéterminée on applique une stratégie de maintenance (bloc $B_6$). Par exemple, afin d'améliorer la disponibilité du moteur, on peut appliquer une stratégie d'anticipation selon un horizon temporel déterminé de type « anticipation à 50 vols » qui permet d'estimer les valeurs des compteurs d'endommagement dans 50 vols. Alors, on recommence les étapes de simulation de consommation sur l'horizon déterminé et si d'autres compteurs d'endommagement atteignent les valeurs prédéterminées qui leur sont associées, on regroupe les actions de maintenance associées et on détermine le nombre de déposes et les types de déposes.

Avantageusement, la simulation sur l'horizon déterminé est réalisée un grand nombre de fois (par exemple, quelques dizaines de milliers de fois) afin d'estimer la moyenne des indicateurs de maintenance (nombre de déposes et types de déposes) avec une grande précision.

A l'issue de la première partie P1 (simulation de maintenance), on obtient des indicateurs d'optimisation en plus des indicateurs de maintenance. Les indicateurs d'optimisation comportent notamment deux indicateurs : la disponibilité (bloc $B_{61}$) du module ou du moteur et le coût (bloc $B_{62}$) associé à la maintenance. Ces indicateurs d'optimisation peuvent être utilisés par la deuxième partie P2 du schéma en bloc pour trouver les meilleures stratégies de maintenance à appliquer.

L'indicateur de coût est une fonction à mono-sortie ou multi-sorties qui dépend de la stratégie de maintenance associée et qui comprend la consommation de pièce P et le coût de dépose C. Par exemple une fonction de coût J pondérée par des poids prédéterminés $w_1$ et $w_2$ peut avoir la forme suivante :

$$J = w_1 \cdot P + w_2 \cdot C$$

Par ailleurs, l'indicateur de disponibilité est une fonction qui peut être définie comme le ratio du temps de fonctionnement d'un module (ou du moteur) sur le nombre de déposes. Avantageusement, on peut considérer l'indicateur de disponibilité comme le temps de fonctionnement réalisé divisé par la somme du temps de fonctionnement réalisé et le temps de fonctionnement qui aurait pu être consommé sur le laps de temps où le module est en maintenance.

Au bloc $B_7$, les moyens de traitement 7 sont configurés pour déterminer un indicateur de compromis entre le coût et la disponibilité. L'indicateur de compromis peut être défini en fonction des paramètres de désirabilités des coûts et disponibilités.

Par exemple, une désirabilité individuelle $d^{DS}$ de coût ou de disponibilité (symbolisé par Y) peut être définie pour chaque objectif ou cible déterminé T de la manière suivante :

$$d^{DS}(Y) = \begin{cases} 0 & \text{pour } Y < LSL \\ \left(\dfrac{Y - LSL}{T - LSL}\right)^{\beta_1} & \text{pour } LSL \leq Y \leq T \\ \left(\dfrac{USL - Y}{USL - T}\right)^{\beta_2} & \text{pour } T < Y \leq USL \\ 0 & \text{pour } USL < Y \end{cases}$$

où LSL est une limite inférieure acceptable, USL est une limite supérieure acceptable, et $\beta_1$, $\beta_2$ sont des paramètres prédéterminés qui dépendent de l'application. On notera qu'une désirabilité de 0 représente une solution inacceptable par rapport aux objectifs, alors qu'une désirabilité de 1 indique la performance maximale souhaitée. Avantageusement, on combine les indicateurs de coûts et de disponibilité en définissant une désirabilité globale $D$ en fonction des désirabilités individuelles de coût $d_c^{DS}$ et de disponibilité $d_d^{DS}$ de la forme suivante :

$$D = \sqrt{d_c^{DS} \times d_d^{DS}}$$

La désirabilité globale $D$ permet de se ramener à une optimisation classique d'un unique objectif.

Au bloc $B_8$, les moyens de traitement 7 sont configurés pour mettre en oeuvre un algorithme d'optimisation en mono-sortie ou en multi-sorties.

De manière générale, on peut utiliser un algorithme génétique avec des étapes de sélection, de croisement et de mutation. Avantageusement, on peut ajouter une optimisation locale des individus par un recuit simulé, notamment pour l'optimisation des paramètres de la stratégie.

Au bloc $B_9$, les moyens de traitement 7 sont configurés pour sélectionner une nouvelle stratégie de maintenance parmi un ensemble prédéterminé de stratégies.

A titre d'exemple, l'ensemble prédéterminé de stratégies de maintenance comporte une stratégie à horizon déterminé et une stratégie à plafonds intermédiaires.

Une stratégie à horizon déterminé consiste lors d'une prévision de dépose relative à un compteur d'endommagement, à estimer le cumul de consommation de chacun des autres compteurs d'endommagement jusqu'à un nombre déterminé de vol. Ensuite, on regroupe les opérations de maintenance associées aux compteurs d'endommagement atteignant leurs valeurs prédéterminées qui sont par exemple égales aux plafonds d'endommagement.

Une stratégie à plafonds intermédiaires consiste à choisir des valeurs prédéterminées (dites plafonds intermédiaires) inférieures aux valeurs des plafonds d'endommagement. Ainsi, lors d'une prévision de dépose relative à un compteur d'endommagement d'une mission de simulation courante, on compare la consommation des autres compteurs d'endommagement de la mission de simulation courante aux plafonds intermédiaires correspondants. On regroupe ensuite les opérations de maintenance associées aux compteurs d'endommagement atteignant les plafonds intermédiaires. Un plafond intermédiaire d'un compteur d'endommagement peut être défini selon un pourcentage donné du plafond d'endommagement associé au compteur.

Les stratégies de maintenance sont donc des règles de bonnes pratiques définies par une structure et des paramètres déterminés. Le but de l'optimisation est de chercher les meilleures stratégies ou combinaisons de stratégies associées à ces paramètres.

Afin de tester chaque nouvelle stratégie, on reboucle sur le bloc $B_6$ pour qu'elle soit appliquée par le simulateur de maintenance (bloc $B_4$) et on recommence les étapes d'optimisation.

Ainsi, on applique une succession de stratégies de maintenance différentes. Pour chaque application, on détermine des indicateurs de coût et de disponibilité associés à la stratégie courante. On détermine ensuite un indicateur de compromis en fonction de ces indicateurs de coût et de disponibilité. Les indicateurs de compromis des différentes stratégies sont comparés entre eux pour sélectionner une stratégie de maintenance optimale.

Avantageusement, la base de données d'apprentissage est mise à jour pour s'adapter aux missions habituelles et/ou futures d'un parc spécifique de moteurs d'aéronef. Ainsi, des missions d'expérience initialement enregistrées dans la base de données peuvent être remplacées par des données représentatives des missions réalisées par chaque groupe d'aéronefs.

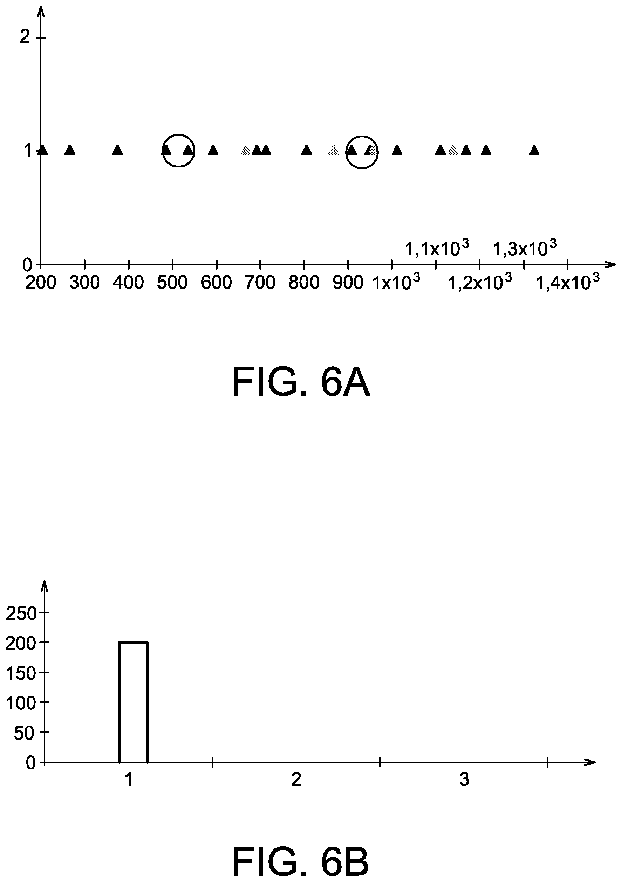

Les Figs. 6A-6D illustrent de manière schématique deux exemples d'application du procédé de la présente invention. Dans chacun des deux exemples, on réalise une simulation de cumul de consommation d'un ensemble de modules d'un moteur neuf pour un horizon de prévision de 1400 vols. A l'instant initial, tous les compteurs d'endommagement sont à zéro. En outre, la simulation sur l'horizon sélectionné est réalisée au moins 1000 fois afin d'affiner la précision des résultats.

Plus particulièrement, les Figs. 6A-6B illustrent un premier scénario où les maintenances sont réalisées individuellement au fur et à mesure de leur déclenchement. La Fig. 6A illustre la répartition d'opérations de maintenances identifiées par les compteurs d'endommagement correspondants. On notera que l'intervalle inter dépose peut parfois être très petit. Par ailleurs, la Fig. 6B illustre la répartition du nombre d'inspections par dépose et indique 200 déposes individuelles.

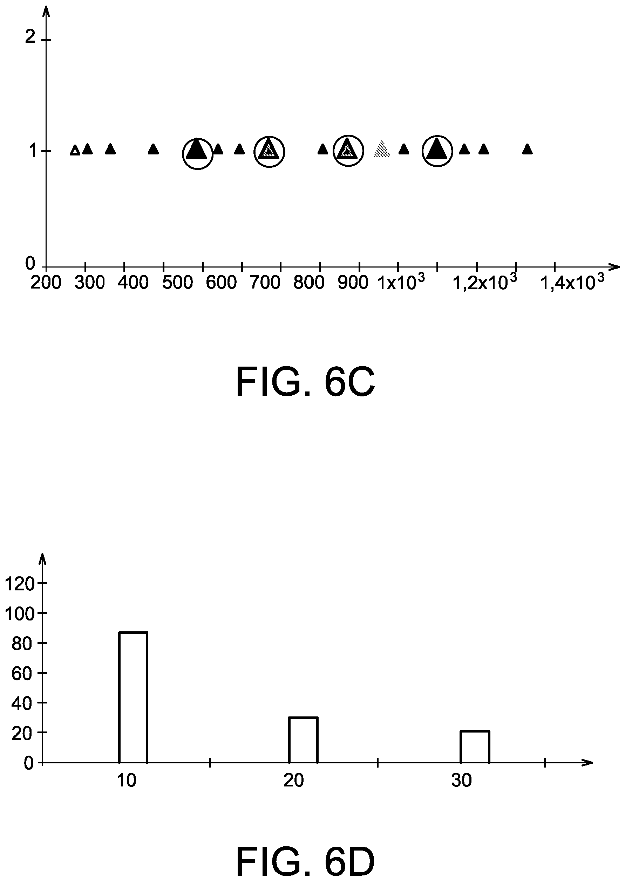

Les Figs. 6C-6D illustrent un deuxième scénario où les maintenances rapprochées sont regroupées. Ainsi, quand une action de maintenance doit être déclenchée, toutes les actions qui se seraient déclenchées dans les 50 prochains vols sont anticipées. En effet, la Fig. 6D illustre une répartition de 140 déposes dont 50 déposes regroupent plusieurs maintenances, ce qui améliore la disponibilité de l'aéronef par rapport au premier scénario.

Finalement, on notera que la présente invention est un outil qui permet de mettre en oeuvre les stratégies de maintenance de manière a priori ou selon l'état courant d'un moteur ou d'une flotte de moteurs. Autrement dit, cet outil permet de choisir les meilleures stratégies soit en ne tenant pas compte de l'état courant de la flotte (*i.e.* en a priori), soit en tenant compte de l'état courant de la flotte en temps réel.

## Revendications

1. Procédé mis en oeuvre par un ordinateur, de prévision d'opérations de maintenance à appliquer sur un moteur d'aéronef comportant une pluralité de composants suivis par des compteurs d'endommagement, chaque compteur d'endommagement étant limité par un plafond d'endommagement correspondant, **caractérisé en ce qu'**il comporte les étapes suivantes :

   - simulation par l'ordinateur d'une consommation desdits compteurs d'endommagement (C1-Cm) en tirant de manière itérative une succession de missions de simulation depuis une base de données d'apprentissage (31) contenant des données enregistrées durant chaque vol par des calculateurs embarqués (15) et collectées au fur et à mesure de vols réels,
   - détermination par l'ordinateur à chaque itération d'un cumul de consommation de chacun desdits compteurs d'endommagement jusqu'à ce qu'au moins un compteur d'endommagement relatif à une mission de simulation courante atteigne une valeur prédéterminée bornée par le plafond d'endommagement associé audit compteur d'endommagement,
   - application par l'ordinateur d'une stratégie de maintenance sur ladite mission de simulation courante pour déterminer des indicateurs de maintenance représentatifs des opérations de maintenance à prévoir sur le moteur d'aéronef (19), les indicateurs de maintenance comprenant le nombre de déposes et le type de dépose,
   - application par l'ordinateur d'une succession de stratégies de maintenance différentes comprenant pour chaque application d'une stratégie courante, une détermination d'indicateurs de coût de consommation et de dépose et d'indicateurs de disponibilité d'un module ou du moteur associés à la stratégie courante, et une détermination d'un indicateur de compromis entre le coût et la disponibilité en fonction desdits indicateurs de coût et de disponibilité, et
   - comparaison par l'ordinateur des indicateurs de compromis des différentes stratégies pour sélectionner une stratégie de maintenance optimale.

2. Procédé selon la revendication 1, **caractérisé en ce que** l'application d'une stratégie de maintenance comporte les étapes suivantes :

   - estimation du cumul de consommation de chacun des compteurs d'endommagement jusqu'à un nombre déterminé de vol, et
   - regroupement des opérations de maintenance associées aux compteurs d'endommagement atteignant leurs plafonds d'endommagement.

3. Procédé selon la revendication 1, **caractérisé en ce que** l'application d'une stratégie de maintenance comporte les étapes suivantes :

   - comparaison de la consommation des compteurs d'endommagement de ladite mission de simulation courante à des plafonds intermédiaires inférieurs aux plafonds d'endommagement, et
   - regroupement des opérations de maintenance associées aux compteurs d'endommagement atteignant lesdits plafonds intermédiaires.

4. Procédé selon l'une quelconque des revendications précédentes, **caractérisé en ce qu'**il comporte les étapes suivantes :

   - répétition de la simulation de consommation des compteurs d'endommagement une pluralité de fois pour déterminer un ensemble de valeurs de consommation associées à chaque indicateur de maintenance, et
   - calcul d'une moyenne desdites valeurs de consommation associées à chaque indicateur de maintenance.

5. Procédé selon l'une quelconque des revendications précédentes, **caractérisé en ce que** la base de données d'apprentissage comporte :

   - un ensemble de missions d'expérience et la consommation des capteurs de potentiel associée à chacune desdites missions d'expérience, et
   - un plan de maintenance prédéterminé comportant les plafonds d'endommagement associés aux capteurs de potentiel et les actions de maintenance correspondantes.

6. Procédé selon la revendication 5, **caractérisé en ce que** la base de données d'apprentissage comporte en outre des indicateurs de missions comprenant un indicateur de sévérité de chaque mission, un indicateur de durée de vol de chaque mission, et un indicateur de type de mission.

7. Procédé selon l'une quelconque des revendications précédentes, **caractérisé en ce que** le tirage de ladite succession de missions de simulation est réalisé de manière aléatoire sur un sous-ensemble de missions d'expérience.

8. Procédé selon l'une quelconque des revendications précédentes, **caractérisé en ce qu'**il comporte une mise à jour de la base de données.

9. Système de prévision d'opérations de maintenance à appliquer sur un moteur d'aéronef comportant une pluralité d'éléments suivis par des compteurs d'endommagement, chaque compteur d'endommagement étant limité par un plafond d'endommagement correspondant, **caractérisé en ce qu'**il comporte :

- des moyens de traitement (7) adaptés pour simuler une consommation desdits compteurs d'endommagement (C1-Cm) en tirant de manière itérative une succession de missions de simulation depuis une base de données d'apprentissage (31) contenant des missions d'expérience comprenant des données enregistrées durant chaque vol par des calculateurs embarqués (15) et collectées au fur et à mesure de vols réels,
- des moyens de traitement (7) adaptés pour déterminer à chaque itération un cumul de consommation de chacun desdits compteurs d'endommagement jusqu'à ce qu'au moins un compteur d'endommagement relatif à une mission de simulation courante atteigne le plafond d'endommagement qui lui est associé,
- des moyens de traitement (7) adaptés pour appliquer une stratégie de maintenance sur ladite mission de simulation courante pour déterminer des indicateurs de maintenance représentatifs des opérations de maintenance à prévoir sur le moteur d'aéronef, les indicateurs de maintenance comprenant le nombre de déposes et le type de dépose,
- des moyens de traitement (7) adaptés pour appliquer une succession de stratégies de maintenance différentes comprenant pour chaque application d'une stratégie courante, une détermination d'indicateurs de coût de consommation et de dépose et d'indicateurs de disponibilité d'un module ou du moteur associés à la stratégie courante, et une détermination d'un indicateur de compromis entre le coût et la disponibilité en fonction desdits indicateurs de coût et de disponibilité, et
- des moyens de traitement (7) adaptés pour comparer des indicateurs de compromis des différentes stratégies pour sélectionner une stratégie de maintenance optimale.

**Patentansprüche**

1. Computergestütztes Verfahren zum Vorhersagen von Wartungsarbeiten, die an einem Flugzeugtriebwerk anzuwenden sind, das eine Vielzahl von durch Schadensmessgeräte überwachten Komponenten umfasst, wobei jedes Schadensmessgerät durch eine entsprechende Schadensobergrenze begrenzt ist, **dadurch gekennzeichnet, dass** es die folgenden Schritte umfasst:

- Simulieren, durch einen Computer, eines Verbrauchs der Schadensmessgeräte (C1-Cm), indem eine Folge von Simulationsmissionen aus einer Lerndatenbank (31), die Daten enthält, die während jedes Flugs von Bordcomputern (15) aufgezeichnet und nach und nach von tatsächlichen Flügen gesammelt werden, iterativ gezogen wird,
- Bestimmen, bei jeder Iteration, eines akkumulierten Verbrauchs jedes der Schadensmessgeräte durch den Computer, bis mindestens ein Schadensmessgerät, das mit einer aktuellen Simulationsmission im Zusammenhang steht, einen vorbestimmten Wert erreicht, der durch die Schadensobergrenze begrenzt ist, die mit dem Schadensmessgerät verbunden ist,
- Anwenden einer Wartungsstrategie durch den Computer auf die aktuelle Simulationsmission, um Wartungsindikatoren zu bestimmen, die für die am Flugzeugtriebwerk (19) zu erwartenden Wartungsarbeiten repräsentativ sind, wobei die Wartungsindikatoren die Schrittanzahl der Demontage und die Art der Demontage umfassen,
- Anwenden einer Folge von verschiedenen Wartungsstrategien durch den Computer, die für jede Anwendung einer aktuellen Strategie ein Bestimmen von Indikatoren für die Verbrauchs- und Demontagekosten und von Indikatoren für die Verfügbarkeit eines Moduls oder des Triebwerks, die mit der aktuellen Strategie verbunden sind, und ein Bestimmen eines Indikators für den Kompromiss zwischen den Kosten und der Verfügbarkeit in Abhängigkeit von den Kosten- und Verfügbarkeitsindikatoren umfasst, und
- Vergleichen von Kompromissindikatoren für die verschiedenen Strategien, um eine optimale Wartungsstrategie auszuwählen.

2. Verfahren nach Anspruch 1, **dadurch gekennzeichnet, dass** das Anwenden einer Wartungsstrategie die folgenden Schritte umfasst:

- Schätzen des kumulierten Verbrauchs jedes Schadensmessgeräts bis zu einer bestimmten Anzahl von Flügen, und
- Gruppieren der Wartungsarbeiten, die mit den Schadensmessgeräten verbunden sind, die ihre Schadensobergrenzen erreichen.

3. Verfahren nach Anspruch 1, **dadurch gekennzeichnet, dass** das Anwenden einer Wartungsstrategie die folgenden Schritte umfasst:

- Vergleichen des Verbrauchs vor Schadensmessgeräte der aktuellen Simulationsmission mit Zwischenobergrenzen, die unterhalb der Schadensobergrenzen liegen, und
- Gruppieren der Wartungsarbeiten, die mit den Schadensmessgeräten verbunden sind, die die Zwischenobergrenzen erreichen.

4. Verfahren nach einem der vorhergehenden Ansprüche, **dadurch gekennzeichnet, dass** es die folgenden Schritte umfasst:

- mehrmaliges Wiederholen der Simulation des Verbrauchs der Schadensmessgeräten, um einen Satz von Verbrauchswerten zu bestimmen, die mit jedem Wartungsindikator verbunden sind, und
- Berechnen eines Durchschnitts der Verbrauchswerte, die mit jedem Wartungsindikator verbunden sind.

5. Verfahren nach einem der vorhergehenden Ansprüche, **dadurch gekennzeichnet, dass** die Lerndatenbank Folgendes umfasst:

- einen Satz von Erfahrungsmissionen und den Verbrauch der Potentialsensoren, die mit jeder der Erfahrungsmissionen verbunden sind, und
- einen vorbestimmten Wartungsplan, der die Schadensobergrenzen umfasst, die mit den Potentialsensoren und den entsprechenden Wartungsmaßnahmen verbunden sind.

6. Verfahren nach Anspruch 5, **dadurch gekennzeichnet, dass** die Lerndatenbank ferner Missionsindikatoren umfasst, die einen Schweregradindikator für jede Mission, einen Flugdauerindikator für jede Mission und einen Missionstypindikator umfassen.

7. Verfahren nach einem der vorhergehenden Ansprüche, **dadurch gekennzeichnet, dass** das Ziehen der Folge von Simulationsmissionen zufällig aus einem Teilsatz von Erfahrungsmissionen erfolgt.

8. Verfahren nach einem der vorhergehenden Ansprüche, **dadurch gekennzeichnet, dass** es das Aktualisieren der Lerndatenbank umfasst.

9. System zum Vorhersagen von Wartungsarbeiten, die an einem Flugzeugtriebwerk anzuwenden sind, das eine Vielzahl von durch Schadensmessgeräte überwachten Elementen umfasst, wobei jedes Schadensmessgerät durch eine entsprechende Schadensobergrenze begrenzt ist, **dadurch gekennzeichnet, dass** es Folgendes umfasst:

- Verarbeitungsmittel (7), die dazu ausgelegt sind, einen Verbrauch der Schadensmessgeräte (C1-Cm) zu simulieren, indem eine Folge von Simulationsmissionen aus einer Lerndatenbank (31), die Daten enthält, die während jedes Flugs von Bordcomputern (15) aufgezeichnet und nach und nach von tatsächlichen Flügen gesammelt werden, iterativ gezogen wird,
- Verarbeitungsmittel (7), die dazu ausgelegt sind, bei jeder Iteration einen akkumulierten Verbrauch jedes der Schadensmessgeräte zu bestimmen, bis mindestens ein Schadensmessgerät, das mit einer aktuellen Simulationsmission im Zusammenhang steht, die Schadensobergrenze erreicht, die mit ihm verbunden ist,
- Verarbeitungsmittel (7), die dazu ausgelegt sind, eine Wartungsstrategie auf die aktuelle Simulationsmission anzuwenden, um Wartungsindikatoren zu bestimmen, die für die am Flugzeugtriebwerk zu erwartenden Wartungsarbeiten repräsentativ sind, wobei die Wartungsindikatoren die Schrittanzahl der Demontage und die Art der Demontage umfassen,
- Verarbeitungsmittel (7), die dazu ausgelegt sind, eine Folge von verschiedenen Wartungsstrategien anzuwenden, die für jede Anwendung einer aktuellen Strategie ein Bestimmen von Indikatoren für die Verbrauchs- und Demontagekosten und von Indikatoren für die Verfügbarkeit eines Moduls oder des Triebwerks, die mit der aktuellen Strategie verbunden sind, und ein Bestimmen eines Indikators für den Kompromiss zwischen den Kosten und der Verfügbarkeit in Abhängigkeit von den Kosten- und Verfügbarkeitsindikatoren umfasst, und
- Verarbeitungsmittel (7), die dazu ausgelegt sind, Kompromissindikatoren für die verschiedenen Strategien zu vergleichen, um eine optimale Wartungsstrategie auszuwählen.

## Claims

1. Method implemented by computer, of forecasting maintenance operations to be applied to an aircraft engine comprising a plurality of components monitored by damage counters, each damage counter being limited by a corresponding damage ceiling, **characterised in that** it comprises the following steps:

- computer simulation of the consumption of said damage counters (C1-Cm) by iteratively drawing a series of simulation missions from a learning database (31) containing data recorded during each flight by onboard computers (15) and collected progressively during actual flights,
- computer determination at each iteration of an accumulated consumption for each of said damage counters, until at least one damage counter related to a current simulation mission reaches a predetermined value limited by the damage ceiling associated with said damage counter,
- application by the computer of a maintenance strategy on said current simulation mission to determine maintenance indicators representative of maintenance operations to be planned on the aircraft engine (19), with the maintenance indicators including the number of removals and the type of removal,
- application by the computer of a series of different maintenance strategies, comprising for each application of a current strategy, a determination of consumption and removal cost indicators and availability indicators of a module or the engine associated with the current strategy, and a determination of a compromise indicator as a function of said cost and availability indicators, and
- comparison by the computer of the compromise indicators of the different strategies to select an optimum maintenance strategy.

2. Method according to claim 1, **characterised in that** application of a maintenance strategy includes the following steps:

   - estimate the cumulated consumption of each damage counter up to a determined number of flights; and
   - group maintenance operations associated with damage counters reaching their damage ceilings.

3. Method according to claim 1, **characterised in that** application of a maintenance strategy includes the following steps:

   - compare the consumption of damage counters of said current simulation mission with intermediate thresholds or ceilings below damage ceilings, and
   - group maintenance operations associated with damage counters reaching said intermediate ceilings.

4. Method according to any one of the previous claims, **characterised in that** it includes the following steps:

   - repeat the simulated consumption of damage counters a plurality of times to determine a set of consumption values associated with each maintenance indicator, and
   - calculate an average of said consumption values associated with each maintenance indicator.

5. Method according to any one of the previous claims, **characterised in that** the learning database includes:

   - a set of experience missions and consumption of potential sensors associated with each of said experience missions, and
   - a predetermined maintenance plan comprising damage ceilings associated with potential sensors and corresponding maintenance actions.

6. Method according to claim 5, **characterised in that** the learning database also includes mission indicators including a severity indicator for each mission, a flight duration indicator for each mission, and a mission type indicator.

7. Method according to any one of the previous claims, **characterised in that** said series of simulation missions is drawn at random from a subset of experience missions.

8. Method according to any one of the previous claims, **characterised in that** it includes an update to the database.

9. System for forecasting maintenance operations to be applied to an aircraft engine comprising a plurality of components monitored by damage counters, each damage counter being limited by a corresponding damage ceiling, said system comprising:

   - processing means (7) adapted to simulate consumption of said damage counters (C1-Cm) by iteratively drawing a series of simulation missions from a learning database (31) containing data recorded during each flight by onboard computers (15) and collected progressively during actual flights,
   - processing means (7) adapted to determine a cumulated consumption of each of said damage counters for each iteration until at least one damage counter related to a current simulation mission reaches the damage ceiling associated with said damage counter,
   - processing means (7) adapted to apply a maintenance strategy on said current simulation mission to determine maintenance indicators representative of maintenance operations to be performed on the aircraft engine, with the maintenance indicators including the number of removals and the type of removal,
   - processing means (7) adapted to apply a series of different maintenance strategies, comprising for each application of a current strategy, a determination of consumption and removal cost indicators and availability indicators of a module or the engine associated with the current strategy, and a determination of a compromise indicator as a function of said cost and availability indicators, and

- processing means (7) adapted to compare compromise indicators of the different strategies to select an optimum maintenance strategy.

FIG. 1

# FIG. 2

# FIG. 3

EP 3 080 670 B1

|     | C1  | C2  | · · · · · · · | Cm  |
| --- | --- | --- | ------------- | --- |
| M1  | · · · | · · · |               | · · · |
| M2  | · · · | · · · |               | · · · |
|  ⋮  |     |     |               |     |
| Mn  | · · · | · · · | · · · · · · ·  | · · · |

# FIG. 4A

| A1  | B1  | E1  | C1  | S1  | I1  | OP1  |
| --- | --- | --- | --- | --- | --- | ---- |
|     |     | E2  | C2  | S2  |     | OP2  |
|     | B2  | E3  | C3  | S3  | I3  | OP3  |
|     |     | E4  | C4  | S4  |     | OP4  |
|     | B3  | E5  | C5  | S5  |     | OP5  |
|  ⋮  |  ⋮  |     | Ci  | Si  |     |      |
| An  |     |     | Cm  | Sm  | Im  | OPm  |

# FIG. 4B

FIG. 5

FIG. 6A

FIG. 6B

FIG. 6C

FIG. 6D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Impacts of low-pressure (LP) compressors' fouling of a turbofan upon operational-effectiveness of a military aircraft. APPLIED ENERGY. ELSEVIER SCIENCE PUBLISHERS, 02 Janvier 2008, vol. 85, 243-270

- Methods to assess the operational reliability of an aircraft system: problemof dependency between component states. *LAAS REPORT,* 01 Juin 2006, vol. XX (6449